# EUROPEAN PATENT APPLICATION

(11) **EP 1 248 311 A2**
(43) Date of publication of application: **09.10.2002**
(21) Application number: 02007315.1
(22) Date of filing: 03.04.2002
(51) Int. Cl.: H01M 8/02

(54) **Process for producing a fuel cell separator**

(30) Priority: 03.04.2001 JP 2001104836
(71) Applicant: MITSUBISHI CHEMICAL CORPORATION, Chiyoda-ku, Tokyo 100-0005 (JP)
(72) Inventor: Masakazu, Hashiguchi, Mitsubishi Chem. Corp. Yok., Yokohama-shi, Kanagawa 227-0033 (JP); Suzuki, Mitsuo, Mitsubishi Chem. Corp. Yokohama, Yokohama-shi, Kanagawa 227-0033 (JP)
(74) Representative: VOSSIUS & PARTNER

(57) **Abstract**

A separator for fuel cells is efficiently mass-produced by heating and compression-molding a raw material mixture of a carbonaceous powder and a binder while reducing the residence time in a compression-molding machine without impairing the quality or functions of the separator to be obtained. In this process for producing a fuel cell separator, the raw material mixture of a carbonaceous powder and a binder is heated in a heating oven, subsequently introduced into a compression-molding machine, and then compression-molded therein.

## Description

The present invention relates to a process for producing a separator for fuel cells. More particularly, the invention relates to a process for highly efficiently producing a fuel cell separator by mixing a carbonaceous powder with a binder, heating the mixture, and then compression-molding it.

Fuel cells utilizing the reaction of hydrogen with oxygen are recently attracting attention as power generation systems which comply with the mitigation of problems concerning resources, the environment, etc., and investigations are being made on the practical use thereof in various fields. The basic structure of a fuel battery comprises a stack of from several tens to several hundreds of cells each comprising positive and negative, porous electrode plates, an electrolyte sandwiched therebetween, and a gas-barrier conductive platy separator disposed on the outer side of each of the electrode plates. Typical examples of such cells include the ribbed-electrode type in which the positive and negative electrode plates each have, in the separator-side surface, grooves serving as reaction gas passages for passing hydrogen, air, etc. therethrough, and further include the ribbed-separator type in which each separator has such grooves formed in a surface thereof.

Separators for use in such fuel cells are produced generally by mixing a carbonaceous powder with a binder and compression-molding the mixture with heating. Specifically, the process comprises mixing a carbonaceous powder with a binder, packing the mixed raw material into a mold, subsequently introducing the mold into a compression-molding machine, heating and compressing the mixed raw material in the compression-molding machine, cooling the mold until the molded material hardens, and then depressurizing the mold. The series of operations consisting of heating, compressing, cooling, and depressurization is carried out in the compression-molding machine because the compression-molding machine is generally equipped with a heater, and the demolding is conducted outside the compression-molding machine. Namely, the technique which has been commonly used for satisfactorily forming an optionally ribbed fuel cell separator in a thin platy form having a thickness of about from 1 mm to several tens of millimeters while preventing deformation such as warpage or bulging and for forming ribs having high shape accuracy is to conduct the series of operations of heating, compression-molding, cooling, and depressurization within a compression-molding machine.

However, the technique heretofore in use in which the series of operations of heating, compression-molding, cooling, and depressurization is conducted within a compression-molding machine has a drawback that the compression-molding machine is occupied by the work throughout this series of operations, resulting in considerably reduced productivity especially in mass production.

An aim of the invention is to provide a process in which a separator for fuel cells is produced by heating and compression-molding a mixed raw material comprising a carbonaceous powder and a binder in a manner which eliminates the problem of the related-art technique. It has been found that when the mixed raw material is heated not in a compression-molding machine as in the technique heretofore in common use but in a heating oven and subsequently introduced into a compression-molding machine and compression-molded therein, then the residence time in the compression-molding machine can be reduced and a fuel cell separator can be efficiently produced. That is, it has been found that a process suitable for mass-producing a fuel cell separator can be provided. The invention has been completed based on this finding.

The invention provides a process for producing a separator for fuel cells which comprises heating and compression-molding a mixed raw material obtained by mixing a carbonaceous powder with a binder, wherein the mixed raw material is heated in a heating oven, subsequently introduced into a compression-molding machine, and then compression-molded therein.

In the invention, the mixed raw material is heated in a heating oven which is not a compression-molding machine, and this heated mixed raw material is introduced into a compression-molding machine and compression-molded therein. Because of this, the residence time in the compression-molding machine can be reduced by the time necessary for heating. Consequently, the efficiency of operation of the compression-molding machine is heightened and a separator for fuel cells can be efficiently mass-produced. Although the mixed raw material is heated in a heating oven which is not a compression-molding machine and is then compression-molded with a compression-molding machine, the separator obtained has intact quality and functions. Thus, a separator having the desired performance can be efficiently mass-produced.

The heating before the compression-molding in the invention is preferably conducted at a temperature higher than the glass transition point (Tg) of the binder and lower than the decomposition point thereof. Use of a temperature lower than the decomposition point of the binder is advantageous in inhibiting the molded material from suffering the cracking, bulging, and deformation caused by the gas generation by binder decomposition. This heating step is preferably conducted continuously while continuously sending the mixed raw material to the heating oven.

When the compression-molding is followed by depressurization and subsequent demolding, it is preferred to conduct cooling at any stage in the period of from the compression-molding to the demolding and to conduct the demolding at a temperature lower than the glass transition point (Tg) of the binder.

In this case, the molded material after the depressurization is preferably cooled continuously to a temperature lower than the Tg of the binder.

In the invention, it is more preferred, from the standpoint of improving productivity, to continuously supply the mixed raw material to each of the steps of heating, compression-molding, depressurization, cooling, and demolding to thereby continuously produce a separator.

Embodiments of the process for producing a separator for fuel cells according to the present invention will be explained below in detail.

In the process of the invention, a carbonaceous powder is first mixed with a binder to produce a mixed raw material.

As the carbonaceous powder is usually used a graphite powder. This graphite powder is not particularly limited. Examples thereof include natural graphite which is available in a flaky, granular, massive, soil-like, or another form and has been optionally powdered and artificial graphites which are produced in a massive or another form by the kneading, molding, baking, and graphitization of a raw material consisting mainly of petroleum coke, pitch coke, or the like and have been optionally powdered. Also usable is expanded graphite.

From the standpoints of conductivity, cell performance, etc., the carbonaceous powder, e.g., graphite powder, is preferably one having an ash content of 1% by weight or lower, more preferably 0.5% by weight or lower. The content of alkali metals, alkaline earth metals, and transition metals therein is preferably 500 ppm or lower, more preferably 100 ppm or lower.

The volatile matter content in the carbonaceous powder is preferably from 2% by weight or lower, more preferably 1% by weight or lower, from the standpoints of separator surface smoothness, cell performance, etc. The fixed-carbon content in the powder is preferably 98% by weight or higher, more preferably 99% by weight or higher.

Particle diameters of the carbonaceous powder are as follows. From the standpoints of separator performance, etc., the maximum particle diameter thereof is preferably 1,000 µm or smaller, more preferably 500 µm or smaller, most preferably 300 µm or smaller. From the standpoints of separator moldability, separator performance, etc., a lower content of fine particles is desirable. Consequently, the average particle diameter of the powder is preferably from 1 to 100 µm, more preferably from 3 to 70 µm, most preferably from 5 to 50 µm.

On the other hand, the binder is not particularly limited. Examples thereof include resins such as thermoplastic resins and thermosetting resins, rubbers, thermoplastic elastomers, and mixtures of two or more of these.

Examples of the thermoplastic resins usable as the binder include saturated polyester resins, styrene/acrylic resins, styrene resins, ABS resins, polyamide resins, polycarbonate resins, polysulfone resins, poly(vinyl chloride) resins, polyolefin resins, poly(phenylene ether) resins, poly(phenylene sulfide) resins, poly(vinyl butyral) resins, acrylic resins, fluororesins, phenoxy resins, urethane resins, block copolymers of two or more of these resins, and mixtures of two or more thereof.

Examples of the thermosetting resins include phenolic resins, epoxy resins, unsaturated polyester resins, melamine resins, urea resins, diallyl phthalate resins, and mixtures of two or more of these. The phenolic resins may be any of novolac resins, resol resins, and modifications of these, e.g., rubber-modified phenolic resins.

The rubber-modified phenolic resins can be obtained by reacting an unvulcanized rubber with a phenolic resin. Examples of the unvulcanized rubber include fluororubbers, silicone rubbers, butyl rubbers, chloroprene rubber, nitrile rubbers, nitrile/chloroprene rubbers, chlorinated butyl rubbers, chlorinated polyethylene, epichlorohydrin/ethylene oxide rubbers, epichlorohydrin/ethylene oxide/acrylic glycidyl ether terpolymers, urethane rubbers, acrylic rubbers, ethylene/propylene rubbers, styrene rubbers, butadiene rubbers, natural rubber, and copolymers of two or more of these rubbers. Such rubbers may be used alone or as a mixture of two or more thereof.

The novolac resins are resins obtained by condensation-polymerizing at least one phenol compound selected, for example, from phenol, o-cresol, m-cresol, p-cresol, 2,5-xylenol, 3,5-xylenol, o-ethylphenol, methylphenol, p-ethylphenol, propylphenol, n-butylphenol, tert-butylphenol, 1-naphthol, 2-naphthol, 4,4'-biphenyldiol, bisphenol A, pyrocatechol, resorcinol, hydroquinone, pyrogallol, 1,2,4-benzenetriol, and phloroglucinol with at least one member selected, for example, from aldehydes such as formaldehyde, acetaldehyde, propionaldehyde, benzaldehyde, and furfural and ketones such as acetone, methyl ethyl ketone, and methyl isobutyl ketone in the presence of an acid catalyst. The resol resins are resins obtained in the same manner as in the polycondensation for novolac resin production, except that an alkali catalyst is used in place of the acid catalyst.

Among those phenolic resins, the novolac resins undergo a curing reaction in the presence of a curing agent to give a cured resin, while the resol resins undergo a curing reaction even in the absence of a curing agent to give a cured resin. It is therefore desirable that when a novolac resin is used as a phenolic resin, a curing agent be used to cure the resin during the compression-molding of a separator. Examples of the curing agent include hexamethylenetetramine and amino compounds having at least two functional groups, e.g., methylol, alkoxymethyl, or acetoxymethyl groups. Examples of such amino compounds include melamine derivatives, such as methoxymethylmelamine, and resol resins. These curing agents may be used generally in an amount of from 5 to 10% by weight based on the total amount of the novolac resin and the curing agents.

Examples of the rubbers and thermoplastic elastomers include natural rubber (isoprene rubber), synthetic rubbers, styrene-based thermoplastic elastomers, thermoplastic urethane elastomers, thermoplastic polyester elastomers, thermoplastic polyamide elastomers, thermoplastic polyolefin elastomers, and mixtures of two or more of these. Specific examples thereof include butadiene rubber, isoprene rubber, chloroprene rubber, styrene/butadiene rubbers, acrylonitrile/butadiene rubbers, butyl rubbers, ethylene/propylene rubbers, ethylene/butene rubbers, urethane rubbers, fluororubbers, silicone rubbers, styrene/isoprene block copolymers and hydrogenated copolymers derived therefrom, styrene/butadiene block copolymers and hydrogenated copolymers derived therefrom, styrene/butylene block copolymers, polyetherester block copolymers, polyesterester block copolymers, polyether block amide copolymers, and mixtures of two or more of these. A crosslinking agent may be used to crosslink those rubbers during molding. Examples of the crosslinking agent include sulfur and peroxides. However, peroxides are preferred.

In the case where a thermoplastic resin or thermoplastic elastomer to which a curing agent has been added or a rubber to which a vulcanizer has been added is used as a binder, a crosslinking reaction occurs due to the curing agent or crosslinking agent (vulcanizer) to give a cured resin.

Preferred of the aforementioned examples of the binder are the following. Preferred of the thermosetting resins are phenolic resins. Preferred of the thermoplastic resins are polyolefin resins. Preferred of the rubbers are ethylene/propylene rubbers, isoprene rubber, styrene/butadiene rubbers, and butyl rubbers. Preferred of the thermoplastic elastomers are hydrogenated copolymers derived from styrene/butadiene block copolymers. Especially preferred of these are the polymers which do not cause defects in the molded material due to, for example, decomposition gas generation during the heating or compression-molding. Specifically, polymers having a heating loss (weight loss in the range of from 50 to 150°C upon heating from room temperature to 150°C in a nitrogen gas atmosphere at a rate of 5 °C/min) of, for example, 2% by weight or less are preferred. For example, it is preferred to select a thermoplastic resin, a rubber, a thermoplastic elastomer, or a mixture of these.

The particle diameter of the binder preferably is almost the same as or smaller than the particle diameter of the carbonaceous powder. Specifically, the particle diameter thereof is generally from 0.5 to 1.2 times, preferably from 0.6 to 1.1 time, more preferably from 0.7 to 1.0 time, the particle diameter of the carbonaceous powder. However, since two small particle diameters result in air inclusion among particles of the carbonaceous powder and binder to make the powder mixture bulky, the particle diameter of the binder is preferably 1 µm or larger.

The carbonaceous powder is mixed with the binder optionally together with a curing agent, crosslinking agent, etc. This mixing may be accomplished by evenly mixing the ingredients by means of a mixing machine such as, e.g., a tumbler blender, ribbon blender, twin-cylinder mixer, Henschel mixer, high-speed mixer, or revolution/rotation type mixer (e.g., planetary mixer), or by mixing and kneading the ingredients with a kneading machine such as, e.g., a single- or twin-screw extruder, roll mill, Banbury mixer, kneader, or Brabender.

This mixing is preferably conducted with heating at usually about 300°C or lower or after the carbonaceous powder has been wetted by an organic solvent or aqueous medium. This technique is advantageous in that the carbonaceous powder and the binder can be mixed more evenly and a separator having higher evenness in property can be produced. For the same reasons, the binder to be mixed is preferably in the form of a solution or dispersion in an organic solvent or aqueous medium.

Examples of the organic solvent for use in wetting the carbonaceous powder or preparing a solution or dispersion of the binder include alkanes such as butane, pentane, hexane, heptane, and octane, cycloalkanes such as cyclopentane, cyclohexane, cycloheptane, and cyclooctane, alcohols such as methanol, ethanol, propanol, butanol, amino alcohols, hexanol, heptanol, octanol, decanol, undecanol, diacetone alcohol, furfuryl alcohol, and benzyl alcohol, Cellosolve derivatives such as methyl Cellosolve, ethyl Cellosolve, butyl Cellosolve, methyl Cellosolve acetate, and ethyl Cellosolve acetate, propylene glycol derivatives such as propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, and dipropylene glycol dimethyl ether, ketones such as acetone, methylaminoketones, cyclohexanone, and acetophenone, ethers such as dioxane and tetrahydrofuran, esters such as butyl acetate, amyl acetate, ethyl butyrate, butyl butyrate, diethyl oxalate, ethyl pyruvate, ethyl 2-hydroxybutyrate, ethyl acetoacetate, methyl lactate, ethyl lactate, and methyl 3-methoxypropionate, halogenated hydrocarbons such as chloroform, methylene chloride, and tetrachloroethane, aromatic hydrocarbons such as benzene, toluene, xylene, phenol, and cresol, and highly polar solvents such as dimethylformamide, dimethylacetamide, and N-methylpyrrolidone.

Of such organic solvents, those in which the binder can dissolve and which have a solubility parameter close to that of the binder are preferred for use with the binder. For example, alcohols are suitable for thermosetting resins such as phenolic resins, and aromatic hydrocarbons are suitable for thermoplastic resins such as polyolefin resins and for rubbers and thermoplastic elastomers.

On the other hand, the aqueous medium is not particularly limited. However, water is usually used.

A mixture of any of the aforementioned organic solvents with an aqueous medium can be used. Although the organic solvent and aqueous medium may be mixed in any desired proportion, the ratio therebetween is generally about from 1/100 to 100/1.

It is preferred that an organic solvent for wetting the carbonaceous powder and an organic solvent for preparing a solution or dispersion of the binder be selected so that these organic solvents are azeotropic. It is especially preferred to use the same organic solvent or the same aqueous medium.

The amount of the organic solvent or aqueous medium to be used for wetting the carbonaceous powder is preferably from 1 to 300 parts by weight per 100 parts by weight of the carbonaceous powder. In the solution or dispersion of the binder, the binder concentration is preferably from 1 to 90% by weight.

In the case of using a curing agent or crosslinking agent (vulcanizer) for the binder, the curing agent or crosslinking agent (vulcanizer) may be incorporated by any method such as, e.g., a method in which the curing agent or crosslinking agent (vulcanizer) is mixed into either the binder or the solution or dispersion thereof in an organic solvent or aqueous medium, a method in which the curing or crosslinking agent is mixed into the carbonaceous powder which may have been wetted, or a method in which the curing or crosslinking agent is mixed in the form of a solution or dispersion in an organic solvent or after having been wetted by an organic solvent. However, the preferred method is to mix the curing or crosslinking agent into the carbonaceous powder which has been wetted.

The amount of the binder to be used is preferably from 1 to 60 parts by weight, more preferably from 1 to 30 parts by weight, per 100 parts by weight of the carbonaceous powder. Especially when the binder is a thermosetting resin, the amount thereof is preferably from 5 to 30 parts by weight per 100 parts by weight of the carbonaceous powder. When the binder is a thermoplastic resin, rubber, or thermoplastic elastomer, the amount thereof is preferably from 1 to 20 parts by weight per 100 parts by weight of the carbonaceous powder. In case where the amount of the binder used is smaller than the lower limit, the separator obtained tends to be impaired in mechanical strength and other properties. In case where the amount of the binder used exceeds the upper limit, the separator tends to be impaired in performances including conductivity.

The mixture thus obtained by mixing a carbonaceous powder with a binder and a curing agent or crosslinking agent (vulcanizer) is wet, pasty, or massive. This mixture is hence suitably dried with heating before being subjected to compression-molding with heating. Any temperature may be used for this drying as long as the organic solvent or aqueous medium used can be vaporized and the binder does not alter. In general, however, the drying is conducted at a temperature of 200°C or lower preferably until the content of the organic solvent or aqueous medium in the mixture decreases to 1% by weight or lower.

After the drying with heating, the mixture usually is in an uneven granular or massive state. This granular or massive mixture is crushed into particles having a maximum particle diameter smaller than 3 mm, preferably from 0.1 to 2 mm, more preferably from 0.5 to 1 mm. For this crushing may be used, for example, a mixer, jaw crusher, gyratory crusher, roll mill, sampling mill, jet mill, hammer mill, or impeller breaker.

The mixed raw material thus obtained, which comprises a carbonaceous powder and a binder, is introduced into a heating oven and heated therein.

The heating oven is not particularly limited. From the standpoint of mass production, however, it is preferred to use a heating oven with which the heating step can be continuously conducted while continuously supplying the mixed raw material thereto. Examples of such a heating oven include horizontal or vertical ovens for continuous processing, e.g., tunnel kilns, pusher ovens, and bucket ovens (heating ovens in which a mixed raw material placed in buckets is continuously moved by moving the buckets), and batch ovens (heating ovens used in such a manner that a large amount of a mixed raw material is introduced thereinto at a time, heated, and then discharged therefrom with a belt conveyer, etc.).

Although the mixed raw material may be directly introduced into the heating oven, a preferred method is to place the mixed raw material in a suitable transportable container, e.g., a tray, and introduce this container into the heating oven. This is because the mixed raw material can be prevented from leaking or spilling in the method. It is also possible to introduce the mixed raw material packed into a mold which has been processed so as to give a molding of a desired shape. A release agent is suitably applied to the mold beforehand. Methods for packing the mixed raw material into a mold are not particularly limited. For example, for industrial production, a method may be used in which the mixed raw material is introduced into a hopper and a given amount of the raw material is introduced into a mold and evenly spread over the whole cavity including the corners, suitably using an auxiliary tool, so as to conform to the shape of the cavity.

In the case where a separator which has, on at least one side thereof, many grooves having parallel parts and serving as reaction gas passages is to be formed, this may be accomplished by using a mold which has in the inner surface thereof a rib pattern comprising many straight ridges corresponding to the reaction gas passages.

This heating may be conducted in air. However, a gas such as N₂ or argon may be used as the heating atmosphere according to need.

The heating before introduction into a compression-molding machine is conducted at a temperature around the desired molding temperature. For example, the heating temperature is generally from [(molding temperature) - 30°C] to [(molding temperature) + 50°C], preferably from [(molding temperature) - 20°C] to [(molding temperature) + 40°C], more preferably from [(molding temperature) - 10°C] to [(molding temperature) + 30°C], and is not higher than the decomposition point of the binder. In the case where the mixed raw material which has not been packed into a mold is heated, this heating is preferably conducted at a temperature lower than the glass transition point (Tg) of the binder from the standpoint of handleability.

In the case where the mixed raw material which has been heated and then introduced into a compression-molding machine has a temperature lower than the desired molding temperature, it may be suitably heated with the heater mounted in the compression-molding machine. In the case where the mixed raw material has a temperature higher than the desired molding temperature, the raw material may be suitably cooled gradually before being compression-molded. The latter case is industrially advantages in that the heater can be omitted in the compression-molding. Furthermore, although the compression-molding without heating results in a gradual decrease in temperature during the period of from the compression-molding to depressurization, this cooling, which begins in such an early stage, is more advantageous from the standpoint of reducing the time period to demolding and thereby efficiently producing a separator. However, in case where the temperature of the work decreases to below the Tg of the binder during the compression-molding, the work has impaired moldability. The heat-molding machine may hence be suitably provided with a heat insulator so as to diminish the temperature decrease.

Any method may be used for heating the mixed raw material as long as the whole mixed raw material is heated to a desired temperature prior to the compression-molding. Examples thereof include a method in which the mixed raw material is introduced into a heating oven set at a desired temperature and a method in which the mixed raw material is introduced into an oven and then gradually heated therein.

The heating temperature can be ascertained with a surface thermometer or with a thermometer fitted, e.g., to the mold. It can be easily controlled by regulating the temperature of the heating oven or of the heater mounted in the compression-molding machine.

After having been heated in a heating oven, the mixed raw material is taken out and introduced into a compression-molding machine to conduct compression-molding. It is preferred in this operation that the mixed raw material taken out of the heating oven be immediately introduced into a compression-molding machine, for example, in 10 minutes, preferably in 5 minutes, more preferably in 2 minutes.

In the case where the mixed raw material is heated without being packed in a mold, the mixed raw material thus heated may be packed into a mold disposed in the compression-molding machine. This method is effective in saving or diminishing the trouble of mold introduction and the consumption of energy for mold heating. However, from the standpoint of evenly packing the mixed raw material into a mold, it is preferred that the heated mixed raw material which is in an easily handleable state be packed into a mold and this mold be introduced into a compression-molding machine. The method in which the mixed raw material is packed into a mold before heating and the mold after heating is taken out of the heating oven and introduced into a compression-molding machine is preferred in that it is easy to regulate the mold and the mixed raw material so as to be more even in temperature.

The compression-molding machine is not particularly limited. However, in the case where two or more molds are to be introduced into the compression-molding machine, it can have a constitution for multiple compressing (two or more molds are placed in a row and the raw material packed therein is simultaneously compression-molded) or a constitution for multistage compression-molding (two or more molds are vertically stacked and simultaneously compressed).

The molding pressure and molding temperature in the compression-molding machine are suitably selected according to the kinds of the carbonaceous powder and binder used, the proportion thereof, and other factors so that the work is sufficiently degassed to sufficiently fuse the carbonaceous powder and binder to each other and that the molding obtained is free from cracks or deformation such as warpage. In general, a lower pressure may be used when the molding temperature is relatively high, and a higher pressure is used when the molding temperature is relatively low. The molding pressure is generally from 40 to 400 MPa, preferably from 65 to 300 MPa. Molding pressures lower than the lower limit tend to result in insufficient fusion between the carbonaceous powder and the binder to cause defects. Molding pressures higher than the upper limit tend to result in burrs (protrusions of the work from the mold). The molding temperature is generally higher than the T_{g} of the binder used so as to mold the raw material into a desired shape. From the standpoint of obtaining a separator free from surface roughness, chipping, cracking, or deformation (warpage or bulging), it is preferred to conduct the compression-molding at a temperature lower than the decomposition point of the binder. In the case where a mixture of two or more binders is used, the term "temperature higher than the T_{g} of the binder" means a temperature higher than the T_{g} of the binder having the lowest T_{g}. However, it is desirable to use a temperature higher than the weight-average T_{g} calculated from the proportion of the binders.

For molding a thin platy ribbed separator free from surface roughness, chipping, cracking, or deformation (warpage or bulging) in high yield, it is desirable to conduct the molding at a temperature of generally (T_{g} + 20°C) or higher, preferably (T_{g} + 30°C) or higher, more preferably not lower than the melting point (Tₘ) of the binder, even more preferably (Tₘ + 20°C) or higher, most preferably (Tₘ + 30°C) or higher. However, excessively high molding temperatures result in too high flowability of the work, a higher tendency to burr generation, and poor dimensional stability of the resultant molding. In addition, such too high molding temperatures not only impose a heavier thermal load on the mold but are disadvantageous from the standpoint of the cooling which is conducted before the later step of demolding. Consequently, the molding is conducted generally at a temperature below the decomposition point of the binder, preferably at [(Tₘ of the binder) + 100°C] or lower, more preferably at [(Tₘ of the binder) + 50°C] or lower. For example, the molding temperature is preferably about from 50 to 400°C, more preferably about from 100 to 300°C.

The term "decomposition point of a binder" means the temperature at which the binder, when heated from room temperature in a nitrogen gas atmosphere at a rate of 5 °C/min in thermal analysis by DSC or TG-DTA, begins to undergo an endothermic or exothermic change.

Heating may be conducted after the mixed raw material is introduced into a compression-molding machine from the heating oven. However, in case where heating is continued after the initiation of compression to elevate the temperature of the mixed raw material, a decomposition gas tends to generate from the mixed raw material and the resultant molding hence tends to have reduced strength and unevenness of properties. Consequently, it is preferred to conduct the compression-molding while keeping the mixed raw material undergoing substantially no temperature increase from the compression-molding initiation temperature. This temperature regulation can improve separator homogeneity, so that the separator is less apt to suffer cracking, deformation, or the like and has improved performance. The term "keeping the mixed raw material undergoing substantially no temperature increase" means operations including one in which the work is heated, after the initiation of compression-molding, in such a degree that no decomposition gas generates. Specifically, such an operation means heating to a temperature higher by up to 10°C, preferably by up to 8°C, than the compression-molding initiation temperature. However, to conduct compression-molding at a temperature not higher than the temperature of the work just before the compression-molding is industrially advantageous because a heating operation is unnecessary and the molding thus obtained has improved performance.

The homogeneity of the molding is, for example, as follows. The separator obtained by the process of the invention has a maximum bending stress of generally 10 MPa or higher, preferably from 10 to 150 MPa, a deflection of generally 0.1 mm or larger, preferably from 0.2 to 3.0 mm, and a volume resistivity (in-plane direction), which is desirably low, of generally 0.1 mΩ·cm or higher, with the upper limit thereof being generally 200 mΩ·cm, preferably 100 mΩ·cm, more preferably 50 mΩ·cm. However, by conducting the compression-molding while keeping the mixed raw material undergoing substantially no temperature increase from the compression-molding initiation temperature, fluctuations of the values of these properties in the plane of the separator can be reduced as shown below. Namely, the coefficient of variation of each property as determined from the values for five points (nine points in the case of volume resistivity) in a sample cut out of the plane of the separator is as follows. With respect to the coefficient of variation of maximum bending stress, the lower limit is generally 0.001 and the upper limit is generally 0.15, preferably 0.12, more preferably 0.10. With respect to that of deflection, the lower limit is generally 0.001 and the upper limit is generally 0.15, preferably 0.12, more preferably 0.10. With respect to that of volume resistivity, the lower limit is generally 0.001 and the upper limit is generally 0.15, preferably 0.12, more preferably 0.10. Coefficient of variation is the value obtained by dividing the standard deviation by the average.

Furthermore, use may be made of a method in which the mixed raw material is heated while being moved through a heating oven, subsequently introduced into a compression-molding machine, and then compression-molded therein in a stationary state or a method in which the mixed raw material introduced into a compression-molding machine is compression-molded while being moved therein. After the compression-molding, depressurization may be conducted while moving the work or keeping it stationary.

After the compression-molding in a compression-molding machine, depressurization is conducted in this compression-molding machine. This depressurization may be conducted in such a manner that the applied pressure is reduced either continuously or by stages. When the work has been sufficiently deaerated during the compression-molding, depressurization may be conducted without cooling because this work is less apt to suffer deformation, e.g., bulging, or cracking. However, in case where deaeration is insufficient, depressurization at a high temperature tends to result in deformation, e.g., bulging, or cracking. It is therefore desirable to conduct depressurization after the work has been cooled in some degree or while cooling the work.

In the case where the work is cooled before or during the depressurization, cooling to an excessively low temperature tends to result in a prolonged residence time in the compression-molding machine and hence reduced productivity. On the other hand, in case where cooling is stopped at an excessively high temperature, there is the possibility that the effect of cooling cannot be obtained and deformation, e.g., bulging, or cracking might occur. Consequently, the temperature to which the work is to be cooled is lower generally by about from several degrees to 150°C, preferably by about from 5 to 100°C, than the work temperature at the time when the compression-molding is terminated, and is preferably not higher than the melting point (Tₘ) of the binder used, more preferably not higher than (Tₘ - 50°C) and not lower than [(T_{g} of the binder) ] . Cooling can be initiated simultaneously with initiation of compression-molding. This technique is preferred in that the work can be more rapidly cooled to a temperature not higher than the Tₘ of the binder and depressurization can be conducted at an earlier stage, e.g., at the time when the compression-molding is terminated. Namely, the technique is effective in reducing the residence time in the compression-molding machine.

Degassing with a vacuum pump or the like is preferred in that a dense molding can be obtained and deformation such as bulging or warpage can be inhibited. In this case, degassing is conducted at a pressure of generally 40,000 Pa (300 Torr) or lower, preferably 27,000 Pa (200 Torr) or lower, more preferably 5,000 Pa (37 Torr) or lower, most preferably 1,300 Pa (10 Torr) or lower.

This degassing can be conducted at any of: (1) before the mixed raw material obtained by mixing a carbonaceous powder with a binder is heated; (2) during the heating of the raw material in a heating oven; (3) after the heating of the raw material in a heating oven and before introduction thereof into a compression-molding machine; (4) during the period of from introduction of the raw material into a compression-molding machine to initiation of compression-molding; and (5) during the period of from initiation of compression-molding to termination of the compression-molding. The degassing may be conducted at one or more of these stages, and may be continuously conducted through two or more of these stages. Degassing operations in those stages have the following effects. The degassing conducted in stage (1), i.e., before heating, is effective in removing the gas contained in the mixed raw material and thereby reducing the interparticle distance. The mixed raw material hence comes to have an increased bulk density and gives a dense molding. Namely, this degassing has the effect of improving properties of the molding, such as strength and volume resistivity. The degassing conducted in stages (2) to (4), i.e., during the period of from heating to initiation of compression-molding, is effective not only in removing the gas contained in the mixed raw material to reduce the interparticle distance but also in removing the gaseous substances generated by heating, and can hence further improve properties of the molding. In particular, the degassing conducted in stage (4) is preferred from the standpoint of improving molding properties because it is most effective in removing both the gas contained in the mixed raw material and the gaseous substances generated by heating. However, from the standpoint of reducing the residence time in the compression-molding machine, the degassing in stage (5) is preferred because degassing can be conducted simultaneously with compression-molding. In the case where degassing is continuously conducted in two or more stages, it is preferred to initiate degassing in an earlier stage because a larger number of effects can be obtained. Specifically, degassing through stages (2) to (5) is preferred, and degassing through stages (1) to (5) is more preferred.

After the degassing is thus conducted, the work is released from the degassed state either in a moment or gradually. In the case where the work has been degassed during compression-molding, it may be released from the degassed state at any stage as long as the work has been deaerated and the carbonaceous powder and the binder have been sufficiently fused to each other. Consequently, the release may be conducted during or after the cooling which will be described later.

In the case where degassing is conducted before the mixed raw material is introduced into a compression-molding machine, the raw material can be degassed in the same mold as that to be used in compression-molding or in a mold having a cavity shape roughly akin to the final molding shape except for minor parts. This degassing has an effect that since the work comes to have an increased bulk density and can be shaped satisfactorily, it has improved handleability when taken out of the mold and transferred to the subsequent step.

For the purpose of improving handleability, the same mold as that to be used in compression-molding or a mold having a cavity shape roughly akin to the final molding shape except for minor parts can be used to conduct preforming to thereby satisfactorily shape the work. This preforming is conducted at a pressure of generally from 20 to 300 MPa, preferably from 20 to 200 MPa. The temperature for this forming is not particularly limited as long as it is lower than the decomposition point of the binder. However, preforming at room temperature is industrially advantageous because heating operation is unnecessary. The bulk density of the mixed raw material obtained through the preforming is generally from 1.2 to 1.8 g/cm³, preferably from 1.3 to 1.8 g/cm³, more preferably from 1.4 to 1.8 g/cm³. The preforming may be conducted before the mixed raw material is heated or conducted after the heating and before the raw material is introduced into a compression-molding machine.

After the compression-molding and depressurization, the mold is taken out of the compression-molding machine and demolding is conducted, in which the molded material is taken out of the mold. This demolding is preferably conducted after the molded material has cooled to a temperature lower than the T_{g} of the binder.

This is because the molded material is apt to deform upon demolding at a temperature not lower than the Tg of the binder, and this deformation is causative of defects such as cracking, bulging, and warpage. As a result, the functions required of a separator are difficult to obtain. Although demolding may be conducted after the molded material has cooled to room temperature, a temperature lower by at least 5°C, preferably by at least 10°C, than the T_{g} of the binder is sufficient for inhibiting cracking or deformation in the demolding. Because of this, it is preferred to conduct demolding at a temperature of (T_{g} - 5°C) or lower, preferably (T_{g} - 10°C) or lower, e.g., from (T_{g} - 20°C) to (T_{g} - 80°C), from the standpoint of reducing the residence time in the mold. Consequently, in the case where the mold is not taken out of the compression-molding machine, the molded material is taken out of the compression-molding machine after having cooled to a temperature in that range.

In this operation, the mold may be allowed to cool naturally. However, from the standpoint of heightening the efficiency of mold utilization and thereby improving productivity, it is preferred to employ an appropriate cooling medium or technique, such as, e.g., a low-temperature gas or spraying with a refrigerant.

In the case where the mold is taken out of the compression-molding machine, cooling may be conducted at any of before, during, and after the depressurization conducted after compression-molding. However, it is preferred to employ a continuous operation such as, e.g., a method in which molds which have undergone depressurization are continuously moved on a belt conveyor and passed through a cooling zone or a method in which molds are moved either one by one batchwise or simultaneously into a cooling chamber and then discharged with a belt conveyor or the like. This continuous operation is advantageous in that demolding can be successively conducted to thereby reduce the residence time in the molds and productivity can hence be improved further.

Even in the case where cooling is conducted at any of before, during, and after the depressurization, the rate of cooling is suitably selected according to the kinds of the carbonaceous powder and binder used, proportion thereof, heating temperature, compression-molding conditions, etc. However, a binder which causes neither decomposition gas generation nor foaming under the conditions for heating/compressing may be used to heighten the rate of cooling. This technique is preferred in that demolding can be conducted earlier and the residence time in the molds can be reduced.

In the cooling, which is conducted, for example, at any of before, during, and after the depressurization after compression-molding to a temperature suitable for demolding, the rate of cooling is generally 0.03 °C/sec (= 1.8 °C/min) or higher, preferably 0.04 °C/sec or higher. However, from the standpoint of reducing the time period to demolding, a cooling rate of 0.05 °C/sec or higher, preferably as high as 0.1 °C/sec or higher, can be used. The upper limit thereof is generally 100 °C/min.

In the process for fuel cell separator production of the invention, a mixed raw material or molds packed with the mixed raw material are continuously supplied to each of the steps of heating, compression-molding, depressurization, cooling, and demolding to thereby continuously produce a separator. This process is preferred in that it is effective in greatly improving productivity because the residence times in the compression-molding machine and in the molds can be reduced.

The separator produced by the process of the invention is not particularly limited in dimension or shape. Examples of the shape include a platy separator. The length and width dimensions are generally from 50 to 1,000 mm each, and preferably from 80 to 500 mm each. The thickness is preferably thin, and generally 20 mm or less, preferably 10 mm or less, and more preferably 5 mm or less. In view of the strength and gas barrier performance, the thickness is preferably 0.1 mm or more, and more preferably 0.3 mm or more. The bulk density of the separator is generally 1.8 g/cm³ or higher, preferably from 1.9 to 2.2 g/cm³. The invention is especially suitable for the production of such a platy fuel cell separator which has, on one or each side thereof, many grooves having parallel parts and serving as reaction gas passages.

The invention will be explained below by reference to Examples and Comparative Example, but the invention should not be construed as being limited to these Examples.

### EXAMPLE 1

To 500 g of a natural graphite powder (average particle diameter, 24 µm) was added 100 g of toluene. These ingredients were mixed together to wet the graphite powder. Thereto was added 75 g of a 33% by weight toluene solution of commercial polystyrene (average molecular weight, 200,000; T_{g}, 100°C; decomposition point, 395°C (literature data)) (polystyrene 25 g + toluene 50 g). This mixture was kneaded with a twin-screw kneader at a rotational speed of about 30 rpm at 40°C for 1 hour and then dried with heating at 100°C for 3 hours. The resultant dry mixture was screened with a sieve to obtain a powder having a maximum particle diameter of 1 mm or smaller. A 100 g portion was taken from this powder and packed into a mold. This powder-packed mold was heated with a drying oven to 180°C over 35 minutes and then placed on a hydraulic pressing plate. The hydraulic pump was operated to conduct compression-molding for 5 minutes at a pressure of 98 MPa. At the time when the compression-molding was initiated, the mold temperature was 179°C. Simultaneously with initiation of the molding, cooling with a water-cooling jacket was initiated. Thereafter, the hydraulic pump was stopped, and the mold was depressurized to the atmospheric pressure while being continuously cooled with the water-cooling jacket to 50°C over 30 minutes. Subsequently, the mold was taken out of the hydraulic press and subjected to a demolding step, in which the mold was allowed to cool to 44°C over 10 minutes and the molded material was then taken out of the mold. Thus, a platy separator for fuel cells was produced which had length and width dimensions of 100 mm each and a thickness of 5 mm.

In this operation, the residence time in the hydraulic press (operating time) was 35 minutes (5 minutes for compression-molding + 30 minutes for depressurization). The time period of from the mold removal from the hydraulic press to the demolding was 10 minutes. The overall time period of from the heating to the demolding was 80 minutes.

The separator obtained was visually examined and was found to have a smooth surface state and no conspicuous recesses or protrusions. It had a bulk density of 2.1 g/cm³ and a volume resistivity as measured with a four-probe-method resistance meter ("Loresta MP" manufactured by Mitsubishi Chemical Corp.) of 2.5 mΩ·cm. This measurement was made on nine points, and the average of these found values was taken as the volume resistivity of the separator. The same applies hereinafter.

### EXAMPLE 2

Compression-molding was conducted in the same manner as in Example 1, except that after the hydraulic pump was stopped, the mold was depressurized to the atmospheric pressure while being continuously cooled with the water-cooling jacket to 100°C over 15 minutes. Thereafter, the mold was taken out of the hydraulic press and cooled with the water-cooling jacket to 50°C at a rate of 0.07 °C/sec. The mold was then subjected to a demolding step, in which the mold was allowed to cool to 44°C over 10 minutes and the molded material was taken out of the mold. Thus, a platy separator for fuel cells was produced.

In this operation, the residence time in the hydraulic press (operating time) was 20 minutes (5 minutes for compression-molding + 15 minutes for depressurization). The time period of from the mold removal from the hydraulic press to the demolding was 22 minutes. The overall time period of from the heating to the demolding was 77 minutes.

The separator obtained was evaluated in the same manner as in Example 1. As a result of visual examination, the separator was found to have a smooth surface state and no conspicuous recesses or protrusions. The separator had a bulk density of 2.1 g/cm³ and a volume resistivity of 2.6 mΩ·cm.

### EXAMPLE 3

Compression-molding was conducted in the same manner as in Example 1, except that after the hydraulic pump was stopped, the mold was depressurized to the atmospheric pressure while being continuously cooled with the water-cooling jacket to 150°C over 5 minutes. Thereafter, the mold was taken out of the hydraulic press and cooled with the water-cooling jacket to 50°C at a rate of 0.07 °C/sec. The mold was then subjected to a demolding step, in which the mold was allowed to cool to 44°C over 10 minutes and the molded material was taken out of the mold. Thus, a platy separator for fuel cells was produced.

In this operation, the residence time in the hydraulic press (operating time) was 10 minutes (5 minutes for compression-molding + 5 minutes for depressurization). The time period of from the mold removal from the hydraulic press to the demolding was 34 minutes. The overall time period of from the heating to the demolding was 79 minutes.

The separator obtained was evaluated in the same manner as in Example 1. As a result of visual examination, the separator was found to have a smooth surface state and no conspicuous recesses or protrusions. The separator had a bulk density of 2.1 g/cm³ and a volume resistivity of 2.7 mΩ·cm.

### EXAMPLE 4

Compression-molding was conducted in the same manner as in Example 1, except that a mixed raw material was prepared in the following manner. To 500 g of a natural graphite powder (average particle diameter, 13 µm) was added 100 g of toluene. These ingredients were mixed together to wet the graphite powder. Thereto was added 75 g of a 33% by weight toluene solution of a commercial styrene/butadiene copolymer (average molecular weight, 220,000; T_{g}, 100°C; decomposition point, 395°C (literature data)) (styrene/butadiene copolymer 25 g + toluene 50 g). This mixture was kneaded with a twin-screw kneader at a rotational speed of 30 rpm at 40°C for 1 hour and then dried with heating at 100°C for 3 hours. The resultant dry mixture was screened with a sieve. Thus, a powder having a maximum particle diameter of 1 mm or smaller was obtained as the mixed raw material. After the compression-molding, the mold was depressurized to the atmospheric pressure while being continuously cooled with the water-cooling jacket to 50°C over 30 minutes. The mold was taken out of the hydraulic press and subjected to a demolding step, in which the mold was allowed to cool to 44°C over 10 minutes and the molded material was taken out of the mold. Thus, a platy separator for fuel cells was produced.

In this operation, the residence time in the hydraulic press (operating time) was 35 minutes. The time period of from the mold removal from the hydraulic press to the demolding was 10 minutes. The overall time period of from the heating to the demolding was 80 minutes.

The separator obtained was evaluated in the same manner as in Example 1. As a result of visual examination, the separator was found to have a smooth surface state and no conspicuous recesses or protrusions. The separator had a bulk density of 2.0 g/cm³ and a volume resistivity of 9.6 mΩ·cm.

### EXAMPLE 5

Compression-molding was conducted in the same manner as in Example 1, except that a mixed raw material was prepared in the following manner. To 500 g of the same natural graphite powder as that used in Example 4 (average particle diameter, 13 µm) was added 100 g of toluene. These ingredients were mixed together to wet the graphite powder. Thereto was added 75 g of a 33% by weight toluene solution of polystyrene (average molecular weight, 340,000; T_{g}, 101°C; decomposition point, 395°C (literature data)) (polystyrene 25 g + toluene 50 g). This mixture was kneaded with a twin-screw kneader at a rotational speed of 30 rpm at 40°C for 1 hour and then dried with heating at 100°C for 3 hours. The resultant dry mixture was screened with a sieve. Thus, a powder having a maximum particle diameter of 1 mm or smaller was obtained as the mixed raw material. After the compression-molding, the mold was depressurized to the atmospheric pressure while being continuously cooled with the water-cooling jacket to 50°C over 30 minutes. The mold was taken out of the hydraulic press and subjected to a demolding step, in which the mold was allowed to cool to 44°C over 10 minutes and the molded material was taken out of the mold. Thus, a platy separator for fuel cells was produced.

In this operation, the residence time in the hydraulic press (operating time) was 35 minutes. The time period of from the mold removal from the hydraulic press to the demolding was 10 minutes. The overall time period of from the heating to the demolding was 80 minutes.

The separator obtained was evaluated in the same manner as in Example 1. As a result of visual examination, the separator was found to have a smooth surface state and no conspicuous recesses or protrusions. The separator had a bulk density of 2.1 g/cm³ and a volume resistivity of 8.6 mΩ·cm.

### COMPARATIVE EXAMPLE 1

A 100 g portion was taken from the same mixture of a natural graphite powder and polystyrene as used in Example 1, and packed into a mold. This powder-packed mold was heated to 180°C with the heater of a hydraulic press. At the time when the mold temperature reached 180°C, which took 45 minutes, the hydraulic pump was operated to conduct compression-molding for 5 minutes at a pressure of 98 MPa. At the time when the compression-molding was initiated, the mold temperature was 179°C. Simultaneously with initiation of the molding, cooling with a water-cooling jacket was initiated. Thereafter, the hydraulic pump was stopped, and the mold was depressurized to the atmospheric pressure while being continuously cooled with the water-cooling jacket to 50°C over 30 minutes. Subsequently, the mold was taken out of the hydraulic press and subjected to a demolding step, in which the mold was allowed to cool to 44°C over 10 minutes and the molded material was then taken out of the mold. Thus, a platy separator for fuel cells was produced which had length and width dimensions of 100 mm each and a thickness of 5 mm.

In this operation, the residence time in the hydraulic press (operating time) was 80 minutes (45 minutes for heating + 5 minutes for compression-molding + 30 minutes for depressurization). Namely, the residence time in the hydraulic press was 2 times or more, 4 times, and 8 times the residence times in Example 1, Example 2, and Example 3, respectively. The time period of from the mold removal from the hydraulic press to the demolding was 10 minutes. The overall time period of from the heating to the demolding was 90 minutes.

The separator obtained was evaluated in the same manner as in Example 1. As a result of visual examination, the separator was found to have a smooth surface state and no conspicuous recesses or protrusions. The separator had a bulk density of 2.1 g/cm³ and a volume resistivity of 2.5 mΩ·cm.

The results obtained in Examples 1 to 3 and Comparative Example 1 are summarized in Table 1.

**Table 1**

| Example | | | Example 1 | Example 2 | Example 3 | Comparative Example 1 |
|---|---|---|---|---|---|---|
| Heating temperature (°C) | | | Tg+80 | Tg+80 | Tg+80 | Tg+80 |
| (A) Heating time in heating oven (min) | | | 35 | 35 | 35 | 0 |
| (B) Residence time in hydraulic press before compression-molding (min) | | | 0 | 0 | 0 | 45 |
| Compression-molding conditions | | Temperature (°C) | Tg+79 | Tg+79 | Tg+79 | Tg+79 |
| | | Pressure (MPa) | 98 | 98 | 98 | 98 |
| | | (C) Time (min) | 5 | 5 | 5 | 5 |
| Conditions for cooling in depressurization | | Temperature at atmospheric pressure (°C) | Tg-50 | Tg | Tg+50 | Tg-50 |
| | | (D) Time (min) | 30 | 15 | 5 | 30 |
| Conditions for cooling in demolding | | Temperature in demolding (°C) | - | 50 | 50 | - |
| | | Cooling rate (°C/sec) | - | 0.07 | 0.07 | - |
| | | (E) Time (min) | - | 12 | 24 | - |
| Demolding conditions | | (F) Time (min) | 10 | 10 | 10 | 10 |
| (G) Residence time in hydraulic press [B+C+D] (min) | | | 35 | 20 | 10 | 80 |
| (H) Time from mold removal from hydraulic press to demolding [E+F] (min) | | | 10 | 22 | 34 | 10 |
| (I) Overall time from heating to demolding [A+G+H] (min) | | | 90 | 77 | 79 | 90 |
| Separator evaluation | Bulk density (g/cm³) | | 2.1 | 2.1 | 2.1 | 2.1 |
| | Volume resistivity (mΩ·cm) | | 2.5 | 2.6 | 2.7 | 2.5 |
| Tg = glass transition point of polystyrene, 100°C | | | | | | |

### EXAMPLE 6

To 5 kg of a natural graphite powder (average particle diameter, 13 µm) was added 1 kg of toluene. These ingredients were mixed together to wet the graphite powder. Thereto was added 1.25 kg of a 20% by weight toluene solution of a styrene-based thermoplastic elastomer (hereinafter referred to as SEBC elastomer; Tg, 100°C; decomposition point, 370°C (literature data)) which was a hydrogenation product derived from a commercial styrenebutadiene block copolymer (styrene content, about 30% by weight) (SEBC elastomer 0.25 kg + toluene 1 kg). This mixture was kneaded with a horizontal mixer having a capacity of 20 L and equipped with a chopper at a mainshaft rotational speed of 230 rpm and a chopper rotational speed of 3,000 rpm at 40°C for 10 minutes. The mixture was then dried with heating at 120°C for 5 hours. The resultant dry mixture was screened with a sieve to obtain a powder having a maximum particle diameter of 1 mm or smaller. A 100 g portion was taken from this powder and packed into a mold. This powder-packed mold was heated to 160°C over 30 minutes and then placed on a hydraulic pressing plate. The hydraulic pump was operated to conduct compression-molding for 5 minutes at a pressure of 98 MPa. At the time when the compression-molding was initiated, the mold temperature was 159°C. Simultaneously with initiation of the molding, cooling with a water-cooling jacket was initiated. Thereafter, the hydraulic pump was stopped, and the mold was depressurized to the atmospheric pressure over 1 minute. Subsequently, the mold was taken out of the hydraulic press and cooled with the water-cooling jacket to 50°C at a rate of 0.07 °C/sec. The mold was then subjected to a demolding step, in which the mold was allowed to cool to 44°C over 10 minutes and the molded material was then taken out of the mold. Thus, a platy separator for fuel cells was produced.

In this operation, the residence time in the hydraulic press (operating time) was 6 minutes (5 minutes for compression-molding + 1 minute for depressurization). The time period of from the mold removal from the hydraulic press to the demolding was 25 minutes. The overall time period of from the heating to the demolding was 61 minutes.

The separator obtained was evaluated in the same manner as in Example 1. As a result of visual examination, the separator was found to have a smooth surface state and no conspicuous recesses or protrusions. The separator had a bulk density of 2.0 g/cm³ and a volume resistivity of 11.1 mΩ·cm.

Subsequently, the separator was examined in accordance with JIS K 7171 in the following manner. A test piece having a length of 100 mm, width of 10 mm, and thickness of 5 mm was cut out of the separator obtained as a product of thermal compression-molding. A load was imposed on the test piece by pressing an indenter against a surface of the separator under the conditions of a support-to-support distance of 80 mm and a test speed of 5 mm/min to measure the maximum bending stress thereof and the deflection at the maximum stress. In the invention, the values of these properties each are the average of found values for five points in the test piece. The results obtained are shown in Table 2.

The coefficient of variation is a value obtained by dividing the standard deviation by the average; the standard deviation and the average were calculated from the found values for five points with respect to maximum bending stress and deflection, and were calculated from the found values for nine points with respect to volume resistivity. The same applies hereinafter.

### EXAMPLE 7

A mold packed with a mixed raw material was heated to 160°C over 30 minutes in the same manner as in Example 6 and then placed on a hydraulic pressing plate. The hydraulic pump was operated to conduct compression-molding for 3 minutes at a pressure of 98 MPa. At the time when the compression-molding was initiated, the mold temperature was 159°C. Simultaneously with initiation of the molding, degassing of the contents of the mold and cooling with a water-cooling jacket were initiated. The degassing of the contents of the mold was conducted by evacuating the whole hydraulic pressing apparatus. Thereafter, the hydraulic pump was stopped, and depressurization to the atmospheric pressure and release of the inside of the hydraulic pressing apparatus from the evacuated state were conducted over 1 minute. Just before the release from the evacuated state, the pressing apparatus had been evacuated to 3,000 Pa. Subsequently, the mold was taken out of the hydraulic press and cooled with the water-cooling jacket to 50°C at a rate of 0.07 °C/sec. The mold was then subjected to a demolding step, in which the mold was allowed to cool to 44°C over 10 minutes and the molded material was then taken out of the mold. Thus, a platy separator for fuel cells was produced.

In this operation, the residence time in the hydraulic press (operating time) was 4 minutes (3 minutes for compression-molding + 1 minute for depressurization). The time period of from the mold removal from the hydraulic press to the demolding was 33 minutes. The overall time period of from the heating to the demolding was 67 minutes.

The separator obtained was evaluated in the same manner as in Example 1. As a result of visual examination, the separator was found to have a smooth surface state and no conspicuous recesses or protrusions. The separator had a bulk density of 2.0 g/cm³ and a volume resistivity of 6.4 mΩ·cm.

Subsequently, the flexural strength and deflection of the separator were measured in the same manner as in Example 6. The results obtained are shown in Table 2. Due to the degassing, a dense molding could be obtained and a separator excellent in volume resistivity and flexural strength could be obtained.

### EXAMPLE 8

A 100 g portion was taken from the powdery mixed raw material used in Example 6 and packed into a mold. This powder-packed mold was heated to 170°C over 33 minutes and then placed on a hydraulic pressing plate. The hydraulic pump was operated to conduct compression-molding for 5 minutes at a pressure of 98 MPa. At the time when the compression-molding was initiated, the mold temperature was 169°C. Simultaneously with initiation of the molding, cooling with a water-cooling jacket was initiated. Thereafter, the hydraulic pump was stopped, and the mold was depressurized to the atmospheric pressure over 1 minute. Subsequently, the mold was taken out of the hydraulic press and cooled with the water-cooling jacket to 50°C at a rate of 0.07 °C/sec. The mold was then subjected to a demolding step, in which the mold was allowed to cool to 44°C over 10 minutes and the molded material was then taken out of the mold. Thus, a platy separator for fuel cells was produced.

In this operation, the residence time in the hydraulic press (operating time) was 6 minutes (5 minutes for compression-molding + 1 minute for depressurization). The time period of from the mold removal from the hydraulic press to the demolding was 27 minutes. The overall time period of from the heating to the demolding was 66 minutes.

The separator obtained was evaluated in the same manner as in Example 1. As a result of visual examination, the separator was found to have a smooth surface state and no conspicuous recesses or protrusions. The separator had a bulk density of 2.0 g/cm³ and a volume resistivity of 11.5 mΩ·cm.

Subsequently, the separator was examined for flexural strength and deflection in the same manner as in Example 6. The results obtained are shown in Table 2.

### EXAMPLE 9

A mold packed with a mixed raw material was heated to 170°C over 33 minutes in the same manner as in Example 8 and then placed on a hydraulic pressing plate. The hydraulic pump was operated to conduct compression-molding for 5 minutes at a pressure of 98 MPa. At the time when the compression-molding was initiated, the mold temperature was 169°C. Simultaneously with initiation of the molding, heating was initiated. Thereafter, the hydraulic pump was stopped, and the mold was depressurized to the atmospheric pressure over 1 minute. The mold temperature in the depressurization was 195°C. Subsequently, the mold was taken out of the hydraulic press and cooled with a water-cooling jacket to 50°C at a rate of 0.07 °C/sec. The mold was then subjected to a demolding step, in which the mold was allowed to cool to 44°C over 10 minutes and the molded material was then taken out of the mold. Thus, a platy separator for fuel cells was produced.

In this operation, the residence time in the hydraulic press (operating time) was 6 minutes (5 minutes for compression-molding + 1 minute for depressurization). The time period of from the mold removal from the hydraulic press to the demolding was 45 minutes. The overall time period of from the heating to the demolding was 84 minutes.

The separator obtained was evaluated in the same manner as in Example 1. As a result of visual examination, the separator was found to have a smooth surface state and no conspicuous recesses or protrusions. The separator had a bulk density of 1.9 g/cm³ and a volume resistivity of 12.4 mΩ·cm.

Subsequently, the separator was examined for flexural strength and deflection in the same manner as in Example 6. The results obtained are shown in Table 2. In this Example, heating was continued after the initiation of compression to elevate the temperature of the mixed raw material. Because of this, the found values of volume resistivity and flexural strength fluctuated and the deflection was small.

**Table 2**

| Example | | | | Example 6 | Example 7 | Example 8 | Example 9 |
|---|---|---|---|---|---|---|---|
| Heating temperature (°C) | | | | Tg+60 | Tg+60 | Tg+70 | Tg+70 |
| (A) Heating time in heating oven (min) | | | | 30 | 30 | 33 | 33 |
| (B) Residence time in hydraulic press before compression-molding (min) | | | | 0 | 0 | 0 | 0 |
| Compression-molding conditions | | Molding initiation temperature (°C) | | Tg+59 | Tg+59 | Tg+69 | Tg+69 |
| | | Pressure (MPa) | | 98 | 98 | 98 | 98 |
| | | (C) Time (min) | | 5 | 3 | 5 | 5 |
| Depressurization conditions | | Temperature at atmospheric pressure (°C) | | Tg+13 | Tg+47 | Tg+20 | Tg+95 |
| | | (D) Time (min) | | 1 | 1 | 1 | 1 |
| Conditions for cooling in demolding | | Temperature in demolding (°C) | | 50 | 50 | 50 | 50 |
| | | Cooling rate (°C/sec) | | 0.07 | 0.07 | 0.07 | 0.07 |
| | | (E) Time (min) | | 15 | 23 | 17 | 35 |
| Demolding conditions | | (F) Time (mm) | | 10 | 10 | 10 | 10 |
| (G) Residence time in hydraulic press [B+C+D] (min) | | | | 6 | 4 | 6 | 6 |
| (H) Time from mold removal from hydraulic press to demolding [E+F] (min) | | | | 25 | 33 | 27 | 45 |
| (I) Overall time from heating to demolding [A+G+H] (min) | | | | 61 | 67 | 66 | 84 |
| Separator evaluation | Bulk density (g/cm³) | | | 2.0 | 2.0 | 2.0 | 1.9 |
| | Volume resistivity | | Found value (mΩ·cm) | 11.1 | 6.4 | 11.5 | 12.4 |
| | | | Coefficient of variation | 0.07 | 0.04 | 0.05 | 0.18 |
| | Maximum bending stress | | Found value (MPa) | 18.9 | 24.2 | 19.2 | 18.5 |
| | | | Coefficient of variation | 0.08 | 0.11 | 0.09 | 0.18 |
| | Deflection | | Found value (mm) | 1.50 | 1.12 | 1.64 | 0.54 |
| | | | Coefficient of variation | 0.07 | 0.05 | 0.06 | 0.06 |
| Tg = glass transition point of SEBC elastomer, 100°C | | | | | | | |

The results given above show the following. In the invention, the mixed raw material is heated in a heating oven which is not a compression-molding machine, and this heated mixed raw material is introduced into a compression-molding machine and compression-molded therein. Because of this, the residence time in the compression-molding machine can be reduced by the time necessary for heating. Consequently, productivity can be heightened.

Although the mixed raw material is heated in a heating oven which is not a compression-molding machine and is then compression-molded with a compression-molding machine, the separator obtained has intact quality and functions. Furthermore, when a separator is produced by the process in which degassing and compression-molding are conducted while keeping the mixed raw material undergoing substantially no temperature increase, then the separator obtained can have improved quality and functions.

As described above in detail, according to the process of the invention for producing a separator for fuel cells, the residence time in the compression-molding machine used for compression-molding can be considerably reduced and productivity can be greatly improved, whereby a fuel cell separator having excellent properties can be efficiently mass-produced.

In particular, by conducting cooling after compression-molding to conduct demolding earlier, not only the time required for separator production can be reduced but also the efficiency of mold utilization can be heightened. Consequently, more efficient production is attained.

The separator obtained has intact quality and functions. Furthermore, when a separator is produced by the process in which degassing and compression-molding are conducted while keeping the mixed raw material undergoing substantially no temperature increase, then the separator obtained can have improved quality and functions.

While the invention has been described in detail and with reference to specific embodiments thereof, it will be apparent to one skilled in the art that various changes and modifications can be made therein without departing from the scope thereof.

This application is based on Japanese patent application No. 2001-104836 filed April 3, 2001, the entire contents thereof being hereby incorporated by reference.

## Claims

1. A process for producing a separator for fuel cells, which comprises:
mixing a carbonaceous powder and a binder to form a mixed raw material,
heating the mixed raw material in a heating oven, and
compression-molding the mixed raw material using a compression-molding machine to form a separator for fuel cells.

2. The process
of claim 1, which further comprises a step of packing the mixed raw material in a mold after the heating.

3. The process
of claim 2, wherein the mixed raw material is packed into a mold which has been set on the compression-molding machine.

4. The process
of claim 2 or 3, wherein said mold is set on the compression-molding machine after packing the mixed raw material therein.

5. The process of any one of claims 1 to 4,
which further comprises a step of subjecting the mixed raw material to shape retention treatment, wherein said shape retention treatment is carried out (i) before the heating and/or (ii) after the heating and before the compression-molding.

6. The process for producing a fuel cell separator of claim 5, wherein the treatment for shape retention is conducted by degassing and/or preforming.

7. The process for producing a fuel cell separator of claim 6, wherein the degassing is conducted at a pressure of 40,000 Pa or lower.

8. The process of claim 6 or 7,
wherein the preforming is conducted at a forming pressure of 20 MPa or higher.

9. The process of any one of claims 1 to 8,
wherein the compression-molding is conducted at a temperature not lower than the glass transition point (Tg) of the binder.

10. The process of any one of claims 1 to 9,
wherein the heating in the heating oven is conducted at a temperature lower than the glass transition point (T_{g}) of the binder.

11. The process of any one of claims 1 to 10,
wherein additional heating is conducted after the mixed raw material has been introduced into the compression-molding machine, the maximum temperature in the additional heating being higher than the glass transition point (T_{g}) of the binder and lower than the decomposition point of the binder.

12. The process of any one of claims 1 to 11,
wherein the mixed raw material which has been packed into one or more molds is heated in the heating oven and the molds are then introduced into the compression-molding machine to compression-mold the mixed raw material.

13. The process for producing a fuel cell separator of claim 12, wherein the heating before the compression-molding is conducted at a temperature higher than the glass transition point (T_{g}) of the binder and lower than the decomposition point of the binder.

14. The process of claim 12 or 13,
wherein the molds are successively sent to the heating oven to continuously conduct the heating step.

15. The process of claim 12, 13 or 14,
wherein the molds are successively supplied to each of the steps of heating, compression-molding, depressurization, cooling, and demolding to continuously produce a separator.

16. The process of any one of claims 1 to 15,
wherein the compression-molding is conducted while keeping the mixed raw material undergoing substantially no temperature increase from the compression-molding initiation temperature.

17. The process for producing a fuel cell separator of claim 16, wherein the temperature of the mixed raw material during the compression-molding is higher by up to 10°C than the compression-molding initiation temperature.

18. The process of any one of claims 1 to 17,
wherein the mixed raw material is degassed in the period of from the preparation thereof by mixing a carbonaceous powder with a binder to termination of the compression-molding.

19. The process for producing a fuel cell separator of claim 18, wherein the degassing is conducted at a pressure of 40,000 Pa or lower.

20. The process of any one of claims 1 to 19,
wherein depressurization is conducted after termination of the compression-molding at a temperature not higher than the melding point (Tₘ) of the binder.

21. The process of any one of claims 1 to 20,
wherein the compression-molding is followed by depressurization and subsequent demolding, and cooling is conducted at any stage in the period of from the compression-molding to the demolding, the demolding being conducted at a temperature lower than the glass transition point (T_{g}) of the binder.

22. The process for producing a fuel cell separator of claim 21, wherein after the depressurization, the molded material is continuously cooled to a temperature lower than the T_{g} of the binder.

23. The process of any one of claims 1 to 22, wherein cooling is conducted in the period of from initiation of the compression-molding to depressurization at a rate of 0.03 °C/sec or higher.

24. The process for producing a fuel cell separator of claims 1 to 23, wherein cooling is conducted in the period of from depressurization to demolding at a rate of 0.03 °C/sec or higher.

25. The process of any one of claims 1 to 24,
wherein the carbonaceous powder is a graphite powder.

26. The process of any one of claims 1 to 25,
wherein the carbonaceous powder has a maximum particle diameter of 1,000 µm or smaller.

27. The process of any one of claims 1 to 26,
wherein the carbonaceous powder has an average particle diameter of from 1 to 100 µm.

28. The process of any one of claims 1 to 27,
wherein the binder comprises at least one member selected from the group consisting of thermoplastic resins, thermosetting resins, rubbers, and thermoplastic elastomers.

29. The process of any one of claims 1 to 28,
wherein the binder comprises at least one member selected from the group consisting of thermoplastic resins, rubbers, and thermoplastic elastomers.

30. The process of any on of claims 1 to 29,
wherein the binder has a particle diameter which is from 0.5 to 1.2 times the particle diameter of the carbonaceous powder.

31. The process of any one of claims 1 to 30,
wherein a medium selected from the group consisting of organic solvents, an aqueous medium, and mixtures of two or more of these is used for wetting the carbonaceous powder and for preparing a solution or dispersion of the binder.

32. The process for producing a fuel cell separator of claim 31, wherein the organic solvents are alkanes, cycloalkanes, alcohols, Cellosolve and derivatives thereof, propylene glycol and derivatives thereof, ketones, ethers, esters, halogenated hydrocarbons, aromatic hydrocarbons, highly polar solvents, and mixtures of two or more of these.

33. The process for producing a fuel cell separator of claim 31 or 32, wherein the aqueous medium is water.

34. The process of claim 31, 32 or 33,
wherein the medium selected from the group consisting of organic solvents, an aqueous medium, and mixtures of two or more of these is used in an amount of from 1 to 300 parts by weight per 100 parts by weight of the carbonaceous powder.

35. The process of claim 31, 32, 33 or 34,
wherein the solution or dispersion of the binder has a binder concentration of from 1 to 90% by weight.

36. The process of any one of claims 1 to 35,
wherein the binder is used in an amount of from 1 to 60 parts by weight per 100 parts by weight of the carbonaceous powder.

37. The process of any one of claims 1 to 36,
wherein the mixed raw material comprising a carbonaceous powder and a binder is one obtained by preparing a wet, pasty, or massive mixture of the carbonaceous powder and the binder using an organic solvent, an aqueous medium, or a mixture of these as a medium and then drying the mixture to such a degree that the content of the organic solvent or aqueous medium in the mixture is reduced to 1% by weight or lower.

38. The process of any on of claims 1 to 37,
wherein the mixed raw material comprising a carbonaceous powder and a binder is one obtained by preparing a wet, pasty, or massive mixture of the carbonaceous powder and the binder using an organic solvent, an aqueous medium, or a mixture of these as a medium, subsequently drying the mixture, and then crushing the resultant granular or massive mixture so as to result in a maximum particle diameter smaller than 3 mm.

39. The process of any one of claims 1 to 38,
wherein the mixed raw material is continuously sent to the heating oven to continuously conduct the heating step.

40. The process of any one of claims 1 to 39,
wherein the mixed raw material is continuously supplied to each of the steps of heating, compression-molding, depressurization, cooling, and demolding to continuously produce a separator.

41. The process of any one of claims 1 to 40,
wherein the fuel cell separator is a platy structure which has, on at least one side thereof, many grooves having parallel parts and serving as reaction gas passages.

42. The process of any one of claims 1 to 41,
wherein the fuel cell separator is a platy structure having length and width dimensions of from 50 to 1,000 mm each and a thickness of from 0.5 to 20 mm.

43. The process of any one of claims 1 to 42,
wherein the fuel cell separator has a flexural strength of from 10 to 150 MPa, a deflection of from 0.1 to 3.0 mm, and an in-plane volume resistivity of from 0.1 to 200 mΩ·cm.

44. The process of any one of claims 1 to 43,
wherein the fuel cell separator has a coefficient of variation of flexural strength of from 0.001 to 0.15, a coefficient of variation of deflection of from 0.001 to 0.15, and a coefficient of variation of volume resistivity of from 0.001 to 0.15.
